# EUROPEAN PATENT APPLICATION

(11) **EP 2 843 958 A1**
(43) Date of publication of application: **04.03.2015**
(21) Application number: 14175381.4
(22) Date of filing: 02.07.2014
(51) Int. Cl.: H04N 21/41, H04N 21/4363, H04N 21/4367

(54) **Content providing electronic device and method**

(30) Priority: 02.09.2013 KR 20130105152
(71) Applicant: Samsung Electronics Co., Ltd, Gyeonggi-do 443-742 (KR)
(72) Inventor: Je, Hae-Jung, 443-742 Gyeonggi-do (KR); Kim, Hyun-Jong, 443-742 Gyeonggi-do (KR); Park, Hyun-Ho, 443-742 Gyeonggi-do (KR); Lee, One-Gun, 443-742 Gyeonggi-do (KR); Jeong, Hong-Seok, 443-742 Gyeonggi-do (KR); Hong, Ju-Pyo, 443-742 Gyeonggi-do (KR)
(74) Representative: Birchenough, Lewis

(57) **Abstract**

A content providing electronic device and method are provided. The electronic device includes a Mobile High-definition Link (MHL) unit configured to encrypt content and to communicate the encrypted content to an external device, and an application processor configured to determine whether a condition for communicating content to the MHL unit is satisfied if the MHL unit is connected to the external device, and to communicate the content to the MHL unit if the condition is satisfied.

## Description

### TECHNICAL FIELD

The present disclosure relates to a content providing electronic device and method.

### BACKGROUND

In general, electronic devices providing content protected with a digital content security technology, such as Digital Rights Management (DRM) can be connected to a Mobile High Definition Link (MHL) unit to communicate (e.g., send) content to an external device, such as a High Definition Television (HDTV), a beam projector, a monitor, and the like. The MHL refers to a technology for providing content outputted from an electronic device through a display of an external device.

The electronic device encrypts content by performing a High Bandwidth Digital Content Protection (HDCP) authentication procedure with the external device through a High Definition Multimedia Interface (HDMI) unit included in an application processor within the electronic device. The HDMI unit communicates (e.g., sends) the encrypted content to the MHL unit on a Transition-Minimized Differential Signaling (TMDS) channel. The MHL unit then sends the encrypted content to the external device. The HDMI provides interfacing between the electronic device, such as a set-top box, a Digital Versatile Disc (DVD) player, and the like, which supports the HDMI, and the external device. HDCP is a form of digital copy protection for use in an HDMI technical environment, meaning a technology about encryption and decryption of digital content between a media source, such as a PC, a DVD player, and a set-top box, and a media receiver device, such as a monitor, a television, and a projector.

Recently, to provide better quality of images, content encryption is performed with HDCP authentication in the MHL unit rather than in the application processor.

As such, content has thus far been encrypted with HDCP authentication in the MHL unit connected to the HDMI unit, instead of performing HDCP authentication within the application processor.

In an electronic device of related art, however, if HDCP authentication is performed in the MHL unit rather than in the application processor, the external device may be unable display content because the image processing unit for providing image and audio information for DRM content does not provide the image and audio information to the HDMI unit.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide an electronic device and method for providing content to an external device with a High Bandwidth Digital Contents Protection (HDCP) authentication procedure performed in a Mobile High Definition Link (MHL) unit.

In accordance with an aspect of the present disclosure, an electronic device is provided. The electronic device includes a MHL unit configured to encrypt content and to communicate the encrypted content to an external device, and an application processor configured to determine whether a condition for communicating content to the MHL unit is satisfied if the MHL unit is connected to the external device, and to communicate the content to the MHL unit if the condition is satisfied.

In accordance with another aspect of the present disclosure, a method is provided. The method includes determining whether a condition for communicating content to a MHL unit is satisfied if the MHL unit is connected to an external device, communicating the content to the MHL unit if the condition is satisfied, encrypting content, and communicating the encrypted content from the MHL unit to an external device.

In accordance with another aspect of the present disclosure, an electronic device is provided. The electronic device includes an application processor configured to determine connectivity between a MHL unit and an external device if the MHL unit is connected to the external device, and to send the MHL unit first-encrypted content through HDCP authentication between a High Definition Multimedia Interface (HDMI) unit and the external device, and the MHL unit configured to decrypt the first-encrypted content, to process the decrypted content, and to send the external device second-encrypted content through HDCP authentication with the external device.

In accordance with another aspect of the present disclosure, a method is provided. The method includes determining connectivity with an external device if a MHL unit is connected to the external device, communicating to the MHL unit content first-encrypted by HDCP authentication between an HDMI unit and the external device, decrypting content encrypted by HDCP authentication between the MHL unit and the external device, processing the decrypted content, and communicating second-encrypted content by HDCP authentication between the MHL unit and the external device.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description take in conjunction with the accompanying drawings, in which:
FIG. 1 is a block diagram of an electronic device according to an embodiment of the present disclosure;
FIG. 2 is a flowchart illustrating a process of providing encrypted content among a High Definition Multimedia Interface (HDMI) unit, a Mobile High Definition Link (MHL) unit, and an external device according to an embodiment of the present disclosure;
FIG. 3 is a flowchart illustrating a process of providing encrypted content from an electronic device to an external device according to an embodiment of the present disclosure;
FIG. 4 is a flowchart illustrating a process of performing a High Bandwidth Digital Contents Protection (HDCP) authentication according to an embodiment of the present disclosure;
FIG. 5 is a detailed flowchart illustrating a process of providing encrypted content from an electronic device to an external device according to an embodiment of the present disclosure;
FIG. 6 is a detailed flowchart illustrating a process of providing encrypted content from an electronic device to an external device according to an embodiment of the present disclosure;
FIG. 7 is a block diagram of an electronic device according to an embodiment of the present disclosure; and
FIG. 8 is a flowchart illustrating a process of providing encrypted content from an electronic device to an external device according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the spirit and scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present disclosure. Descriptions shall be understood as to include any and all combinations of one or more of the associated listed items when the items are described by using the conjunctive term "∼ and/or ∼," or the like.

The terminology used herein is for the purpose of describing particular embodiments only and is not intended to be limiting of the disclosure.

It is to be understood that the singular forms "a," "an," and "the" include plural references unless the context clearly dictates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms including technical and scientific terms used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

According to various embodiments of the present disclosure, an electronic device may include communication functionality. For example, an electronic device may be a smart phone, a tablet Personal Computer (PC), a mobile phone, a video phone, an e-book reader, a desktop PC, a laptop PC, a netbook PC, a Personal Digital Assistant (PDA), a Portable Multimedia Player (PMP), an mp3 player, a mobile medical device, a camera, a wearable device (e.g., a Head-Mounted Device (HMD), electronic clothes, electronic braces, an electronic necklace, an electronic appcessory, an electronic tattoo, or a smart watch), a flexible display device, and/or the like.

According to various embodiments of the present disclosure, an electronic device may be a smart home appliance with communication functionality. A smart home appliance may be, for example, a television, a Digital Video Disk (DVD) player, an audio, a refrigerator, an air conditioner, a vacuum cleaner, an oven, a microwave oven, a washer, a dryer, an air purifier, a set-top box, a TV box (e.g., Samsung HomeSync™, Apple TV™, or Google TV™), a gaming console, an electronic dictionary, an electronic key, a camcorder, an electronic picture frame, and/or the like.

According to various embodiments of the present disclosure, an electronic device may be a medical device (e.g., Magnetic Resonance Angiography (MRA) device, a Magnetic Resonance Imaging (MRI) device, Computed Tomography (CT) device, an imaging device, or an ultrasonic device), a navigation device, a Global Positioning System (GPS) receiver, an Event Data Recorder (EDR), a Flight Data Recorder (FDR), an automotive infotainment device, a naval electronic device (e.g., naval navigation device, gyroscope, or compass), an avionic electronic device, a security device, an industrial or consumer robot, and/or the like.

According to various embodiments of the present disclosure, an electronic device may be furniture, part of a building/structure, an electronic board, electronic signature receiving device, a projector, various measuring devices (e.g., water, electricity, gas or electro-magnetic wave measuring devices), and/or the like that include communication functionality.

According to various embodiments of the present disclosure, any other device that is equipped with at least one image sensor may also be used to perform various embodiments of the present disclosure. The electronic device may also include a device for virtual space.

According to various embodiments of the present disclosure, an electronic device may be any combination of the foregoing devices. In addition, it will be apparent to one having ordinary skill in the art that an electronic device according to various embodiments of the present disclosure is not limited to the foregoing devices.

In various embodiments of the present disclosure, a portable device will be taken as a representative example of the electronic device, but some components of the portable device may be omitted or replaced.

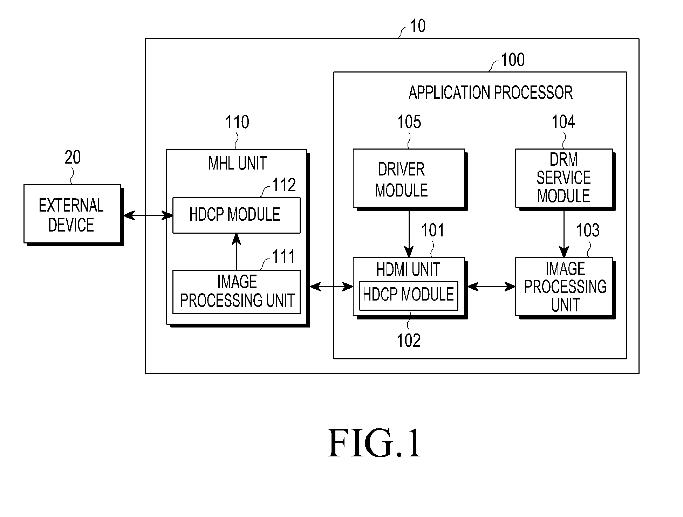

FIG. 1 is a block diagram of an electronic device according to an embodiment of the present disclosure.

Referring to FIG. 1, according to various embodiments of the present disclosure, an electronic device 10 may include an application processor 100 and a Mobile High Definition Link (MHL) unit 110. The MHL unit 110 may be connected to a High Definition Multimedia Interface (HDMI) unit within the application processor 100 via a cable and/or an electronic circuit.

The application processor 100 may include an HDMI unit 101, an image processing unit 103, a Digital Rights Management (DRM) service module 104, and a driver module 105. The application processor 100 may determine whether a condition for communicating (e.g., sending) content to the MHL unit 110 is satisfied and may send the content to the MHL unit 110 if the condition is satisfied. According to various embodiments of the present disclosure, the determining whether a condition for communicating (e.g., sending) content is satisfied may correspond to determining whether the HDMI unit 101 is in a High Bandwidth Digital Content Protection (HDCP) enabled state. According to various embodiments of the present disclosure, the HDMI unit 101 may be switched into the HDCP enabled state by performing a first HDCP authentication procedure among three authentication procedures with the external device 20.

Specifically, the HDMI unit 101 may include an HDCP module 102 to perform, when connected to the MHL unit 110, the first HDCP authentication procedure with an external device 20. Ordinary HDCP authentication is performed in three procedures including first HDCP authentication, second HDCP authentication, and third HDCP authentication. The first HDCP authentication procedure may include exchanging key values between transmitting and receiving devices, calculating resulting values of an HDCP function at respective transmitting and receiving devices, and switching the HDCP module 102 into an enabled state (e.g., an HDCP-enabled state) if the resulting values are the same at the transmitting and receiving devices.

The enabled state means that the HDCP module 101 is in a state in which transmission of content from the image processing unit 103 to the HDMI unit 101 is enabled. The content may be Digital Rights Management (DRM) content.

The HDMI unit 101 may send the content to the MHL unit 110 on a Test Data Management System (TDMS) channel. The content may include multimedia data having video data and audio data combined. The HDCP module 102 may be switched into the enabled state through the first HDCP authentication procedure with the external device 20. The HDCP module 102 may be implemented in hardware, software, or a combination thereof.

The image processing unit 103 may receive content from the DRM service module 104 and request information indicating a state of the HDCP module 102 from the HDMI unit 101. If the HDMI unit 101 responds with information indicating that the HDCP module 102 is in the enabled state, the image processing unit 103 may forward the content to the HDMI unit 101. If a DRM service is requested, the DRM service module 104 may provide DRM content for the image processing unit 103. The DRM service module 104 may be implemented in hardware, software, or a combination thereof.

The driver module 105 may include an HDCP driver, an MHL driver, and an HDMI driver, outputting control signals for performing HDCP authentication, MHL function, and HDMI function. The driver module 105 may be implemented in hardware, software, or a combination thereof.

The MHL unit 110 may include an image processing unit 111 and an HDCP module 112. The MHL unit 110 may be coupled to the HDMI unit 101 to provide content for the external device 20. When a cable is connected between the MHL unit 110 and the external device 20, the MHL unit 110 may perform an MHL determination procedure for determining whether the cable is an MHL cable.

The MHL unit 110 may determine whether to compress the content forwarded from the HDMI unit 101, turn mute on for the external device 20, not to output video data and audio data, and switch the MHL unit 110 into bypass mode for performing HDCP authentication between the HDMI unit 101 and the external device 20. The bypass mode refers to a way of forwarding an HDMI signal received from the HDMI unit 101 to the external device 20 without processing the HDMI signal in the MHL unit 110.

After the HDCP authentication has completed between the application processor 100 and the external device 20, the MHL unit 110 may release the bypass mode, and may perform HDCP authentication with the external device 20.

After the HDCP authentication has been complete with the external device 20, the MHL unit 110 may turn off mute for the external device 20, and may communicate (e.g., send) the content encrypted through the HDCP authentication to the external device 20.

The image processing unit 111 may determine whether to perform compression on the content sent from the HDMI unit 101. Specifically, the image processing unit 111 may determine whether MHL unit 110 is able to send content. If the MHL unit 110 is able to send the content, then the image processing unit 111 may determine to forward the content without compression. If the MHL unit 110 is not able to send the content, then the image processing unit 111 may determine to compress the content in a form that the MHL unit 110 is able to send.

More specifically, the image processing unit 111 may determine whether to compress content in a packed pixel mode by determining whether a resolution of the content sent from the HDMI unit 101 is higher than bandwidth available for the MHL unit 110. If the resolution of the content is higher than the bandwidth available for the MHL unit 110, then the image processing unit 111 may compress the content in the packed pixel mode to use the bandwidth available for the MHL unit 110. Otherwise, if the resolution of the content is lower than the bandwidth available for the MHL unit 110, then the image processing unit 111 may forward the content intact to the HDCP module 112.

The HDCP module 112 may perform HDCP authentication between the MHL unit 110 and the external device 20.

The external device 20 may receive and decrypt encrypted content from the MHL unit 110 and output decrypted content. The external device 20 may be a device, such as a High Definition Television (HDTV), beam projector, monitor, and/or the like, for outputting video data and audio data.

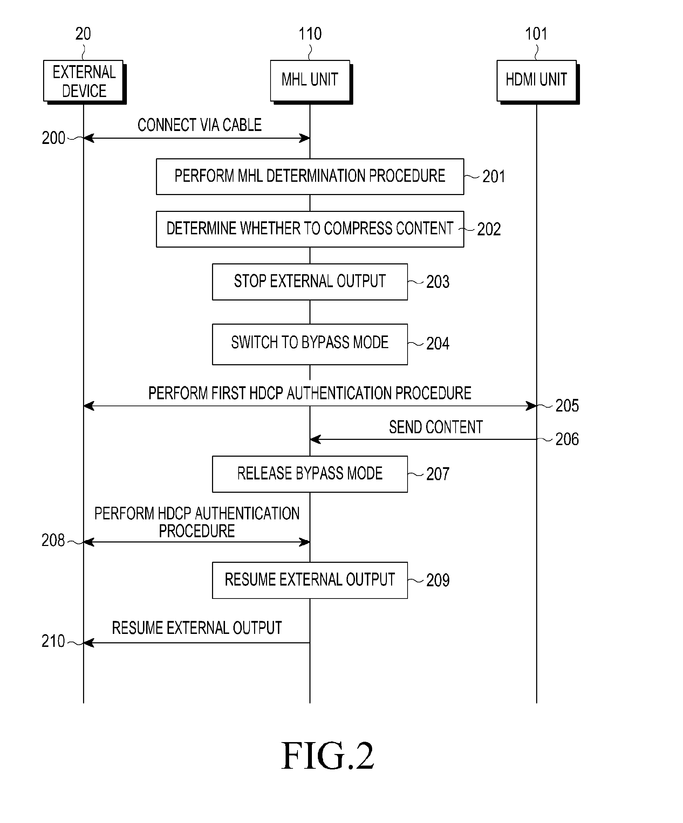

FIG. 2 is a flowchart illustrating a process of providing encrypted content among an HDMI unit, an MHL unit, and an external device according to an embodiment of the present disclosure.

Referring to FIG. 2, at operation 200, an MHL unit 110 is connected to an external device 20 via a cable.

At operation 201, the MHL unit 110 may perform an MHL determination procedure. The MHL determination procedure refers to a procedure of determining whether the cable is an MHL cable.

At operation 202, the MHL unit 110 may determine whether to compress content. Specifically, the MHL unit 110 may determine whether bandwidth for content to be sent over a TDMS channel is available to the MHL unit 110. If the MHL unit 110 determines that the bandwidth for the content is available to the MHL unit 110, then the MHL unit 110 may determine to communicate (e.g., send) the content without compression. Otherwise if the MHL unit 110 determines that the bandwidth for the content is not available to the MHL unit 110, then the MHL unit 110 may determine to compress the content in the packed pixel mode.

At operation 203, the MHL unit 110 may stop external output. For example, the MHL unit 110 may stop external output by turning mute on for the external device 200 not to output video data and audio data.

At operation 204, the MHL unit 110 may be switched into the bypass mode for communication between the HDMI unit 101 and the external device 20.

At operation 205, the HDMI unit 101 may switch the HDCP module 102 into the enabled state by performing the first HDCP authentication procedure with the external device 20. Accordingly, the HDMI unit 101 may receive content from the image processing unit 103.

At operation 206, the HDMI unit 101 may forward the content to the MHL unit 110.

At operation 207, the MHL unit 110 may release the bypass mode.

At operation 208, the MHL unit 110 may perform an HDCP authentication procedure with the external device 20 in order to encrypt the received content.

At operation 209, the MHL unit 110 may resume external output. For example, the MHL unit 110 may resume external output by turning mute off for the external device 20.

At operation 210, the MHL unit 110 may send the external device 20 content encrypted by completion of the HDCP authentication. Accordingly, the external device 20 may output video data and audio data by decrypting the encrypted content.

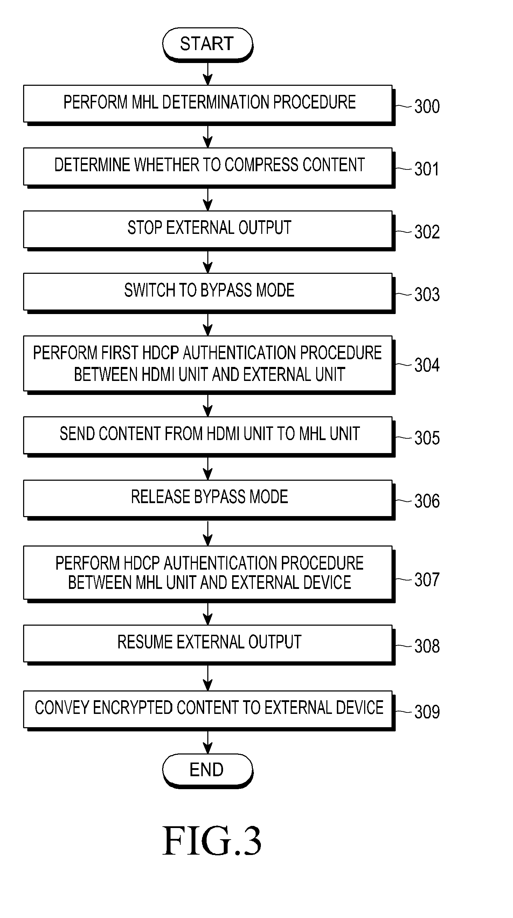

FIG. 3 is a flowchart illustrating a process of providing encrypted content from an electronic device to an external device according to an embodiment of the present disclosure.

At operation 300, an electronic device 10 may perform an MHL determination procedure. For example, when the HDMI unit 101 is connected to the external device 20 via a cable, the electronic device 10 may determine whether an MHL cable is used for connection with the external device 20 by performing an MHL determination procedure for the HDMI unit 101.

At operation 301, the electronic device 10 may determine whether to compress content depending on whether bandwidth for the content received on the TDMS channel is available to the MHL unit 110. If the electronic device 10 determines that the bandwidth for the content is not available to the MHL unit 110, the MHL unit 110 may determine to compress the content in the packed pixel mode.

At operation 302, the electronic device 10 may stop external output in order for the external device 20 not to output video data and audio data.

At operation 303, the electronic device 10 may switch the MHL unit 110 into the bypass mode for communication between the HDMI unit 101 and the external device 20. In other words, the MHL unit 110 may be switched into a state for communicating (e.g., sending) an HDMI signal to the external device 20 without processing.

At operation 304, the electronic device 10 may switch the HDMI unit 101 into an HDCP enabled state. For example, the electronic device 10 may switch the HDMI unit 101 into an HDCP enabled state by performing the first HDCP authentication procedure between the HDMI unit 101 and the external device 20. Specifically, the state of the HDCP module 102 within the HDMI unit 101 may be switched into the enabled state.

At operation 305, the electronic device 10 may communicate (e.g., send) the content from the HDMI unit 101 to the MHL unit 110.

At operation 306, the electronic device 10 may release the bypass mode.

At operation 307, the electronic device 10 may perform an HDCP authentication procedure between the MHL unit 110 and the external device 20. For example, the electronic device 10 may perform an HDCP authentication procedure between the MHL unit 110 and the external device 20 in order to encrypt content. The HDCP authentication procedure may include first, second, and third HDCP authentication procedures.

At operation 308, the electronic device 10 may resume external output of the external device 20.

At operation 309, the electronic device 10 may send the external device 20 content encrypted. For example, the electronic device 10 may send the external device 20 content encrypted by completion of the HDCP authentication. Accordingly, the external device 20 may output video data and audio data by decrypting the encrypted content.

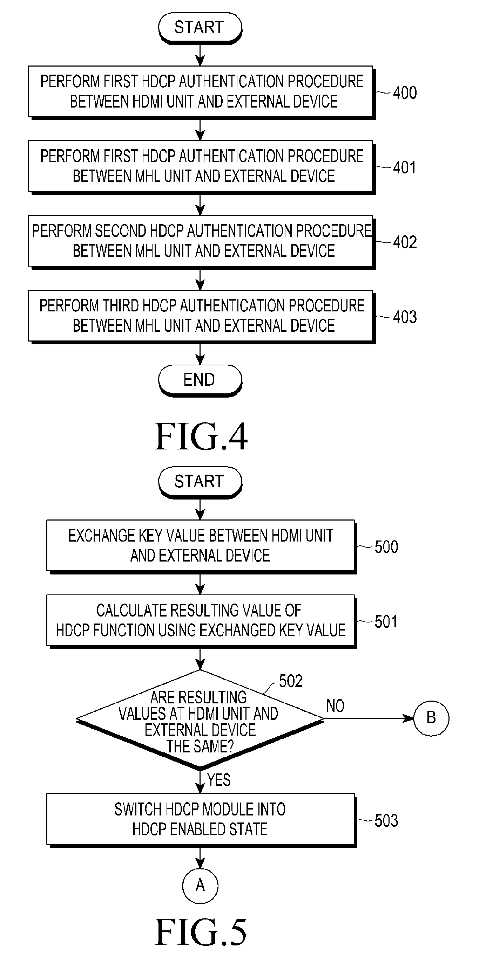

FIG. 4 is a flowchart illustrating a process of performing an HDCP authentication according to an embodiment of the present disclosure.

At operation 400, the electronic device 10 may perform the first HDCP authentication procedure between the HDMI unit 101 and the external device 20. Accordingly, the state of the HDCP module 102 within the HDMI unit 101 may be switched into an enabled state for the image processing unit 103 to send content to the HDMI unit 101. The electronic device 10 may exchange key values between the HDMI unit 101 and the external device 20, calculate a resulting value of an HDCP function, and start the first HDCP authentication procedure between the MHL unit 110 and the external device 20 if the resulting values at the HDMI unit 101 and the external device 20 are the same.

At operation 401, the electronic device 10 may perform the first HDCP authentication procedure between the MHL unit 110 and the external device 20. The electronic device 10 may exchange key values between the MHL unit 110 and the external device 20, calculate a resulting value of an HDCP function, and start the second HDCP authentication procedure between the MHL unit 110 and the external device 20 if the resulting values at the MHL unit 110 and the external device 20 are the same.

At operation 402, the electronic device 10 may perform the second HDCP authentication procedure between the MHL unit 110 and the external device 20. The electronic device 10 may receive from the external device 20 information about whether the external device 20 is a repeater or a receiving device. If the external device 20 is a repeater, then the electronic device 10 may receive a list of respective key values of multiple external devices, calculate a resulting value of an HDCP function using the list of the key values, and start third HDCP authentication between the MHL unit 110 and the external device 20 if the resulting values at the MHL unit 110 and the external device 20 are the same. Otherwise, if the external device 20 is a receiving device, then the electronic device 10 may start the third HDCP authentication between the MHL unit 110 and the external device 20 without performing the second HDCP authentication.

At operation 403, the electronic device 10 may perform the third HDCP authentication between the MHL unit 110 and the external device 20. The electronic device 10 may communicate (e.g., send) encrypted content to the external device 20 while continuing to determine whether the external device 20 is a device that has been connected to the electronic device 10. If determining that the external device 20 is not the device that has been connected to the electronic device 10, the electronic device 10 may stop communicating (e.g., sending) content.

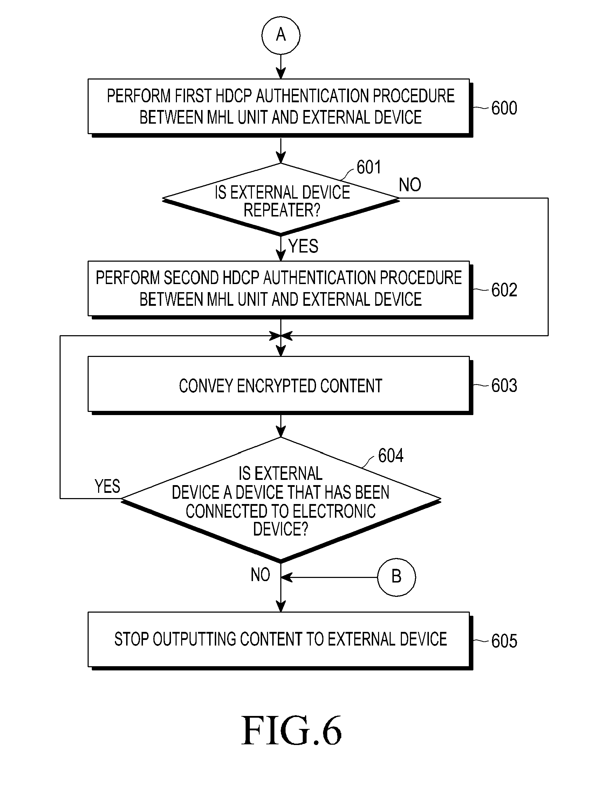

FIGS. 5 and 6 are detailed flowcharts illustrating processes of providing encrypted content from an electronic device to an external device according to various embodiments of the present disclosure.

Referring to FIG. 5, at operation 500, the electronic device 10 may exchange key values between the HDMI unit 101 and the external device 20.

At operation 501, the electronic device 10 may calculate a resulting value of an HDCP function using the exchanged key value.

At operation 502, the electronic device 10 may determine whether the resulting value at the HDMI unit 101 corresponds to a resulting value at the external device 20.

If the electronic device 10 determines that the resulting value at the HDMI unit 101 corresponds to the resulting value at the external device 20 at operation 502, then the electronic device 10 proceeds to operation 503 at which the electronic device 10 may switch the HDCP module 102 within the HDMI unit 101 into an enabled state. Thereafter, the electronic device proceeds to procedure A.

If the electronic device 10 determines that the resulting value at the HDMI unit 101 does not correspond to the resulting value at the external device 20 at operation 502, then the electronic device 10 proceeds to procedure B if the resulting values do not correspond to each other.

Procedure A shown in FIG. 5 is connected to procedure A shown in FIG. 6, and procedure B shown in FIG. 5 is connected to procedure B shown in FIG. 6.

Referring to FIG. 6, at operation 600, the electronic device 10 may perform the first HDCP authentication procedure between the MHL unit 110 and the external device 20. The electronic device 10 may exchange key values between the MHL unit 110 and the external device 20, calculate a resulting value of an HDCP function, and start the second HDCP authentication procedure between the MHL unit 110 and the external device 20 if the resulting value at the MHL unit 110 corresponds to that calculated at the external device 20.

At operation 601, the electronic device 10 may determine whether the external device 20 is a repeater. For example, the electronic device 10 may determine whether the external device 20 is a repeater or a receiving device.

If the electronic device 10 determines that the external device 20 is a repeater at operation 601, then the electronic device 10 may proceed to operation 602 at which the electronic device 10 performs second HDCP authentication between the MHL unit 110 and the external device 20.

If the electronic device 10 determines that the external device 20 is not a repeater at operation 601, then the electronic device 10 proceeds to operation 603. If the external device 20 is not a repeater, then the external device 20 may be a receiving device.

At operation 603, the electronic device 10 may communicate (e.g., send) encrypted content to the external device 20.

At operation 604, the electronic device 10 may determine whether the external device 20 is a device that has been connected to the electronic device 10.

If the electronic device 10 determines that the external device 20 is a device that has been connected to the electronic device 10, then the electronic device 10 may proceed to operation 603 at which the electronic device 10 communicates (e.g., sends) encrypted content to the external device 20 and thereafter perform operation 604 again. Operations 603, 604 and 605 represent the third HDCP authentication procedure between the MHL unit 110 and the external device 20. While performing the third authentication procedure between the MHL unit 110 and the external device 20, the electronic device 10 may continue determining whether the external device 20 is a device that has been connected to the electronic device 10.

If the electronic device 10 determines that the external device 20 is not a device that has been connected to the electronic device 10 at operation 604, then the electronic device 10 may proceed to operation 605 at which the electronic device 10 may determine that the content has been damaged or hacked and thus stop outputting content to the external device 20.

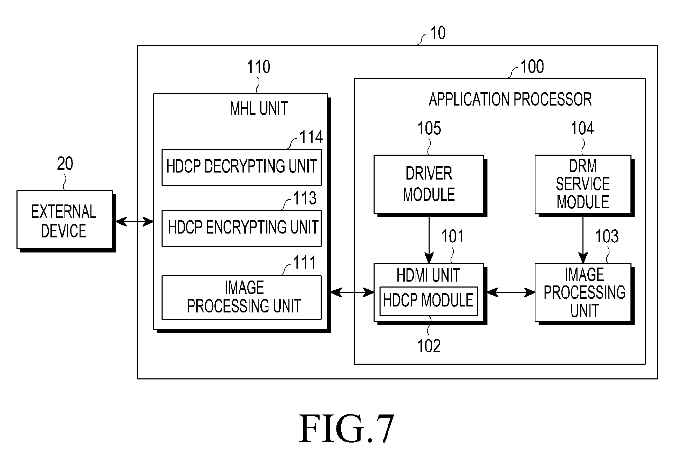

FIG. 7 is a block diagram of an electronic device according to an embodiment of the present disclosure.

Referring to FIG. 7, the MHL unit 110 may be assumed to be a repeater.

The MHL unit 110 of the electronic device 10 may further include an HDCP encrypting unit 113 and an HDCP decrypting unit 114 for handling the received content encrypted by the HDCP module 102 of the HDMI unit 101.

Specifically, the MHL unit 110 may perform the first HDCP authentication procedure with the HDMI unit 101 when connected to the external device 20.

The MHL unit 110 may also communicate (e.g., send) to the HDMI unit 101 information indicating that the MHL unit 110 is a repeater in exchanging key values with the HDMI unit 101. The MHL unit 110 may receive a list of key values from the external device 20 by performing the first HDCP authentication procedure with the external device 20 as well.

The MHL unit 110 may forward to the HDMI unit 101 the list of key values received from the external device 20 while performing the second HDCP authentication procedure with the HDMI unit 101. The HDMI unit 101 may calculate a resulting value of an HDCP function using the list of key values, and compare the resulting value with that of the external device 20. If both resulting values are the same, the HDMI unit 101 may determine that the electronic device 10 is correctly connected to the external device 20 and send the encrypted content to the MHL unit 110.

Upon reception of the encrypted content, the HDCP decrypting unit 114 of the MHL unit 110 decrypts the encrypted content and the image processing unit 111 of the MHL unit 110 determines whether to compress the decrypted content. If the resolution of the content for transmission is higher than the bandwidth available for the MHL unit 110, the image processing unit 111 may compress the content in the packed pixel mode to use the bandwidth available for the MHL unit 110. Otherwise, if the resolution of the content is lower than the bandwidth available for the MHL unit 110, the image processing unit 111 may forward the content intact to the HDCP encrypting unit 113. The image processing unit 111 may then control the HDCP encrypting unit 113 to encrypt the content, and communicate (e.g., send) the encrypted content to the external device 20.

Remaining components may perform the same operations as those described in connection with FIG. 1.

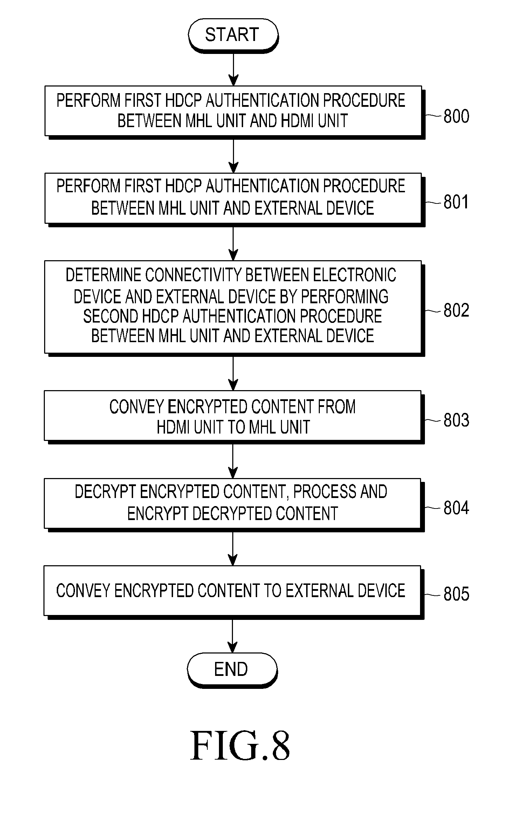

FIG. 8 is a flowchart illustrating a process of providing encrypted content from an electronic device to an external device according to an embodiment of the present disclosure.

Referring to FIG. 8, the MHL unit 110 may be assumed to serve as a repeater.

At operation 800, the HDMI unit 101 may perform the first HDCP authentication procedure with the MHL unit 110. During the first HDCP authentication procedure, the HDMI unit 101 may send the MHL unit 110 information indicating that the HDMI unit 101 is a repeater with key values.

At operation 801, the MHL unit 110 may perform the first HDCP authentication procedure with the external device 20. During this authentication procedure, the MHL unit 110 may receive a list of key values from the external device 20.

At operation 802, the MHL unit 110 may determine connectivity between the electronic device 10 and the external device 20 by performing the second HDCP authentication procedure between the HDMI unit 10 and the external device 20. The HDMI unit 101 may calculate a resulting value of an HDCP function using the list of key values, and compare the resulting value with that of the external device 20. If both resulting values are the same, the HDMI unit 101 may determine that the electronic device 10 is correctly connected to the external device 20.

At operation 803, the HDMI unit 101 may send encrypted content to the MHL unit 110. The HDMI unit 101 may continue connectivity between the MHL unit 110 and the HDMI unit 101 by performing the third HDCP authentication procedure with the MHL unit 110.

At operation 804, the MHL unit 110 may decrypt the encrypted content, process the decrypted content, and encrypt the resulting content. Specifically, the HDCP decrypting unit 114 of the MHL unit 110 may decrypt the encrypted content, and the image processing unit 111 of the MHL unit 110 may determine whether to compress the decrypted content. If the resolution of the content for transmission is higher than the bandwidth available for the MHL unit 110, then the image processing unit 111 may compress the content in the packed pixel mode to use the bandwidth available for the MHL unit 110. Otherwise, if the resolution of the content is lower than the bandwidth available for the MHL unit 110, then the image processing unit 111 may forward the content intact to the HDCP encrypting unit 113. The HDCP encrypting unit 113 of the MHL unit 110 may then encrypt the content.

At operation 805, the MHL unit 110 may communicate (e.g., send) the encrypted content to the external device 20. The MHL unit 110 may continue determining connectivity between the MHL unit 110 and the external device 20 by performing the third HDCP authentication procedure with the external device 20. With the key newly created by continuing to perform the third HDCP authentication procedure, the MHL unit 110 may send newly encrypted content to the external device 20. As such, the electronic device 10 may provide security-enhanced content for the external device 20.

According to the various embodiments of the present disclosure, high quality of content can be provided from an electronic device to an external device by switching an HDMI unit of the electronic device into an HDCP enabled state through an HDCP authentication procedure with the external device, and communicating (e.g., sending) encrypted content to the external device by performing an HDCP authentication procedure between an MHL unit of the electronic device and the external device.

It will be appreciated that the various embodiments of the present disclosure may be implemented in a form of hardware, software, or a combination of hardware and software. The software may be stored as program instructions or computer readable codes executable on the processor on a non-transitory computer-readable medium. Examples of the non-transitory computer readable recording medium include magnetic storage media (e.g., ROM, floppy disks, hard disks, and/or the like), and optical recording media (e.g., CD-ROMs, DVDs, and/or the like). The non-transitory computer readable recording medium can also be distributed over network coupled computer systems so that the computer readable code is stored and executed in a distributed fashion. This media can be read by the computer, stored in the memory, and executed by the processor. The various embodiments of the present disclosure may be implemented by a computer or portable terminal including a controller and a memory, and the memory may be an example of the computer readable recording medium suitable for storing a program or programs having instructions that implement the various embodiments of the present disclosure. Various embodiments of the present disclosure may be implemented by a program having codes for embodying the apparatus and method described in claims, the program being stored in a non-transitory machine-readable storage medium (e.g., a non-transitory computer-readable storage medium). The program may be electronically carried on any medium, such as communication signals transferred via wired or wireless connection, and the present disclosure suitably includes its equivalent.

The electronic device may receive the program from a program provider wired/wirelessly connected thereto, and store the program. The program provider may include a memory for storing programs having instructions to perform the various embodiments of the present disclosure, information necessary for the various embodiments of the present disclosure, and/or the like, a communication unit for wired/wirelessly communicating with the electronic device, and a controller for sending the program to the electronic device on request or automatically.

Several embodiments of the present disclosure have been described in connection with, for example, mobile communication terminals, but a person of ordinary skill in the art will understand and appreciate that various modifications can be made without departing the scope of the present disclosure. Thus, it will be apparent to those ordinary skilled in the art that the disclosure is not limited to the various embodiments described, which have been provided only for illustrative purposes.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
an application processor configured to determine whether a condition for communicating content to a Mobile High-definition Link (MHL) unit is satisfied if the MHL unit is connected to an external device, and to communicate the content to the MHL unit if the condition is satisfied; and
the MHL unit configured to encrypt the content, and to communicate the encrypted content to the external device.

2. The electronic device of claim 1, wherein the application processor comprises a High Definition Multimedia Interface (HDMI) unit configured to perform High-bandwidth Digital Content Protection (HDCP) authentication with the external device.

3. The electronic device of claim 2, wherein the condition for communicating content comprises a condition according to which an HDCP module within the HDMI unit is in an enabled state.

4. The electronic device of claim 3, wherein the HDMI unit is further configured to perform a first HDCP authentication procedure among multiple HDCP authentication procedures between the HDMI unit and the external device to switch the HDCP module into the enabled state if the MHL unit is connected to the external device.

5. The electronic device of claim 4, wherein the HDMI unit is further configured to communicate the content to the MHL unit if the HDCP module is in the enabled state.

6. The electronic device of claim 5, wherein the MHL unit is further configured to determine whether the MHL unit is able to communicate the content, and to compress the content such that the MHL unit is able to communicate the content if the MHL unit is unable to communicate the content.

7. The electronic device of claim 6, wherein the MHL unit is further configured to perform an HDCP authentication procedure with the external device, and to communicate encrypted content through the HDCP authentication procedure with the external device to the external device.

8. The electronic device of claim 1, wherein the application processor is further configured to determine connectivity between the MHL unit and the external device when the MHL unit is connected to the external device, and to send the MHL unit first-encrypted content through High-bandwidth Digital Content Protection (HDCP) authentication between a High Definition Multimedia Interface (HDMI) unit and the external device.

9. The electronic device of claim 1, wherein the MHL unit is further configured to decrypt the first-encrypted content, to process the decrypted content, and to send the external device second-encrypted content through HDCP authentication with the external device

10. A method comprising:
determining whether a condition for communicating content to a Mobile High-definition Link (MHL) unit is satisfied if the MHL unit is connected to an external device;
communicating the content to the MHL unit if the condition is satisfied;
encrypting content; and
communicating the encrypted content from the MHL unit to the external device.

11. The method of claim 10, wherein the determining of whether a condition for communicating content to the MHL unit is satisfied comprises:
determining whether a High-bandwidth Digital Content Protection (HDCP) module of a High Definition Multimedia Interface unit included in an application processor for providing content to the MHL unit is in an enabled state.

12. The method of claim 11, wherein the communicating of the content to the MHL unit comprises:
performing a first HDCP authentication procedure among multiple HDCP authentication procedures between the HDMI unit and the external device to switch the HDCP module into the enabled state; and
communicating the content to the MHL unit if the HDCP module is switched into the enabled state.

13. The method of claim 10, wherein the communicating of the encrypted content from the MHL unit to an external device comprises:
determining whether the MHL unit is able to communicate the content;
compressing the content such that the MHL unit is able to communicate the content, if the MHL unit is not able to communicate the content;
performing an HDCP authentication procedure between the MHL unit and the external device; and
communicating encrypted content through the HDCP authentication procedure to the external device.

14. The method of claim 10, further comprising:
determining connectivity with an external device if the MHL unit is connected to the external device;
communicating to the MHL unit content first-encrypted by High-bandwidth Digital Content Protection (HDCP) authentication between a High Definition Multimedia Interface (HDMI) unit and the external device;
decrypting content encrypted by HDCP authentication between the MHL unit and the external device;
processing the decrypted content; and
communicating second-encrypted content by HDCP authentication between the MHL unit and the external device.

15. The method of claim 14, wherein the determining of connectivity with an external device comprises:
performing HDCP authentication between the external device and the HDMI unit if the MHL unit is connected to the external device;
performing HDCP authentication with the external device; and
determining connectivity with the external device using a key value created by HDCP authentication with the external device.
